# EUROPEAN PATENT SPECIFICATION

(11) **EP 2 110 983 B1**
(45) Date of publication and mention of the grant of the patent: **17.08.2016**
(21) Application number: 09157075.4
(22) Date of filing: 01.04.2009
(51) Int. Cl.: H04L 12/14, H04M 15/00, H04W 4/24

(54) **Providing a roaming service to a user terminal in a communications system**
Bereitstellung eines Roaming-Dienstes an ein Benutzerendgerät in einem Kommunikationssystem
Fourniture d'un service d'itinérance à un terminal utilisateur dans un système de communication

(30) Priority: 16.04.2008 FI 20085318
(43) Date of publication of application: 21.10.2009
(73) Proprietor: Telia Company AB, 106 63 Stockholm (SE)
(72) Inventor: Huoviala, Rauno, 00530 Helsinki (FI); Svahnström, Niclas, 00100 Helsinki (FI)
(74) Representative: Kolster Oy Ab

(56) References cited:
- WO-A-98/59504
- WO-A-2008/017262
- US-A1- 2003 003 894
- US-A1- 2004 052 225
- US-A1- 2004 087 299
- US-A1- 2005 055 292

## Description

### FIELD OF THE INVENTION

The present invention relates to mobile data roaming, and more particularly to customer support.

### BACKGROUND OF THE INVENTION

A roaming subscriber, also referred to as a visiting subscriber, refers to a mobile subscriber who has moved from a home operator network area to another mobile operator network area. Access from the subscriber's mobile station to the visited network is based on a roaming agreement between the home network operator and the visited network operator. Thus, roaming provides the subscriber with an ability to use a mobile or wireless device to make and receive calls outside his/her home network coverage area. Roaming is usually based on a roaming agreement between the home network operator and the visited network operator.

Charging rates are usually higher when the subscriber is roaming. Typically, the user is aware of the fact that it may be expensive to use mobile services abroad. However, the user may have no idea of how much more expensive it is to use a service abroad compared to using the service in the home network. In order to warn the user about a higher price, an "alarm of roaming" may be transmitted by the network to the user terminal.

One of the problems associated with the above arrangement is that the alarm of roaming does not include any prices. The fact that current solutions do not really tell anything about prices may discourage the users from using mobile data services abroad.

One option is to check an operator web page including prices of other operators. However, this option requires user initiative and is difficult to use.

An example of related prior art is US 2004/052225.

### BRIEF DESCRIPTION OF THE INVENTION

An object of the present invention is thus to provide a method, system, and network node for implementing the method so as to solve the above problems. The objects of the invention are achieved by a method and an arrangement which are characterized by what is stated in the independent claims. Preferred embodiments of the invention are disclosed in the dependent claims.

The invention is based on the idea of delivering to a user terminal the price of a service in the current location of the user terminal. The delivering of the price is carried out in response to a predetermined activation procedure initiated in the user terminal. The present invention involves retrieving price information from the home network of the user terminal. In the method, a predetermined activation event related to a mobile data service and to the user terminal is recognized. In response to said recognising, roaming information on the user terminal is provided in a HTTP header to a home network node, wherein the roaming information is visited-network-specific. Based on the roaming information, the home network node is arranged to retrieve charging information, the charging information including a visited-network-specific cost estimate formed in the home network for the user terminal for said mobile data service. The retrieved charging information is then transmitted to the user terminal.

An advantage of the method and arrangement of the invention is that it enables a user to be provided with an indication of how much a mobile data service actually costs abroad.

### BRIEF DESCRIPTION OF THE DRAWINGS

In the following, the invention will be described in greater detail by means of preferred embodiments with reference to the accompanying drawings, in which
Figure 1 illustrates a communications system according to an embodiment of the present solution;
Figure 2 illustrates a communications system according to an embodiment of the present solution;
Figure 3 illustrates signalling according to an embodiment of the present solution;
Figure 4 illustrates signalling according to an embodiment of the present solution;
Figure 5 is a flow chart illustrating operation of a home network node according to an embodiment of the present solution;
Figure 6 is a flow chart illustrating operation of a visited network node according to an embodiment of the present solution.

### DETAILED DESCRIPTION OF THE INVENTION

In the following, embodiments of the present solution will be described with reference to a cellular or wireless communications system, such as a third generation (or beyond 3G) mobile communications system or WLAN (wireless local area network). However, the solution is not meant to be restricted to these embodiments. The present solution is applicable to any user terminal, network node, corresponding component(s), and/or to any communication system or any combination of different communication systems capable of providing or implementing a roaming service. The communication system may be a fixed communication system or a wireless communication system or a communication system utilizing both fixed networks and wireless networks. The protocols used, the specifications of communication systems and network nodes, especially in mobile and wireless communication, develop rapidly. Such development may require extra changes to an embodiment. Therefore, all words and expressions should be interpreted broadly and they are intended to illustrate, not to restrict, the embodiment. The relevant inventive aspect is the functionality concerned, not the network element or equipment where it is executed.

The idea of the present solution is to deliver a mobile data service price (or an estimation of the price) to a user terminal that is roaming abroad. This enables the user to find out how much using a service actually costs, and to avoid uncertainty in data roaming and surprisingly high bills. From an operator's point of view, the present solution enhances customer services and increases the data service usage abroad.

Detailed functionality of the present solution may include several alternatives, but the basics are as follows. A current location (i.e. country, operator) of the user terminal is detected. Next, a total price for a service in the current location is calculated, e.g. EUR/kB, EUR/min, taking into account a local (i.e. visited) GPRS (general packet radio service) charge, GRX (GPRS roaming exchange) charge, an international carrier charge, and/or a charge in the home network of the user terminal. A service price list is then delivered to the customer.

Alternative solutions for detecting the current location of the user terminal may include at least the following: 1) the user terminal activates a PDP (packet data protocol) context, wherein the visited network operator (i.e. the roaming partner) signals visited operator information to the home network of the user terminal, 2) the user activates the user terminal, and the roaming partner checks a home location register (HLR) for the user profile, wherein visited operator information is captured in the home network. The visited operator information includes identification information on the visited operator, such as a mobile country code (MCC) and a mobile network code (MNC) of the visited operator.

A service price list is conducted by determining the roaming data price of the visited operator network; i.e. whether it is, for example, EUR/kB or time based charging. A GRX connection price may also be estimated, as well as a specific international carrier charge to the current location, and data and/or service costs of the home network. The present solution applies the prices to various mobile data services. For example, for mobile television, and VoIP (voice over Internet protocol), it is more feasible to give a price/min, and for browsing a price/kB. For MMS (multimedia messaging service), and IM (instant messaging), the price may be an estimate of a per message price.

Alternative solutions for delivering a service price list may include at least the following: 1) the user terminal activates a browser, wherein a home network server (such as a web server, mobile TV server, IM server) sends a price list page (e.g. a pop-up page), instead or in addition to a homepage, 2) the user terminal is activated, or the user terminal activates a PDP context, wherein a short message (SMS) including a price list is sent from the home network to the user terminal, 3) the user activates the user terminal, wherein an SMS including the price list is sent to the user terminal from a roaming partner's network, 4) the service price list is activated by the user (terminal) with a browser or SMS.

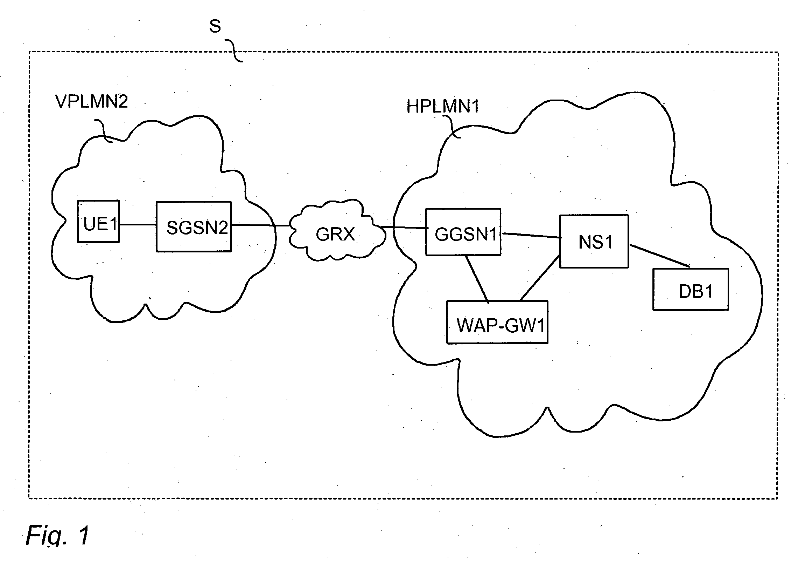

Figure 1 illustrates a communications system S according to a first embodiment of the present solution. Referring to Figure 1, the communications system S comprises a home network HPLMN1, such as a public land mobile network PLMN, and a visited network VPLMN2, such as a public land mobile network PLMN, operated by different network operators. The visited network and the home network are connected to each other via a centralized IP routing network GRX (GPRS roaming exchange) that interconnects general packet radio service (GPRS) networks and enables global roaming coverage directly or via other GRX networks. The home network HPLMN1 includes a gateway GPRS support node GGSN1, a server node NS1 (such as a web server, mobile television (TV) server, or instant messaging (IM) server), a price information database DB1, and, optionally, a wireless access protocol gateway WAP-GW1. The database DB1 is accessible via the server node NS1. The server node NS1 is connected to GGSN1 either directly or via WAP-GW1. The visited network VPLMN2 includes a serving gateway GPRS support node SGSN2. GGSN1 and SGSN2 are able to communicate with each other via an IP network such as GRX. The system S further includes at least one user terminal UE1. In Figure 1, a situation is shown where the user terminal UE1 is located in the coverage area of the visited network VPLMN2, and HPLMN1 is the home network HPLMN2 of the user terminal. In Figure 1, it is assumed that UE1 is capable of roaming in VPLMN2. Figure 1 shows a simplified version of a cellular or wireless network structure, which only illustrates components necessary for illustrating the present solution, even though those skilled in the art naturally know that a general communications system also comprises other functions and structures, which do not have to be described in more detail herein. Although each network node or function UE1, GGSN1, WAP-GW1, NS1, DB1, GRX, SGSN2, HPLMN1, VPLMN2 has been depicted as one entity, different modules and memory may be implemented in one or more physical or logical entities.

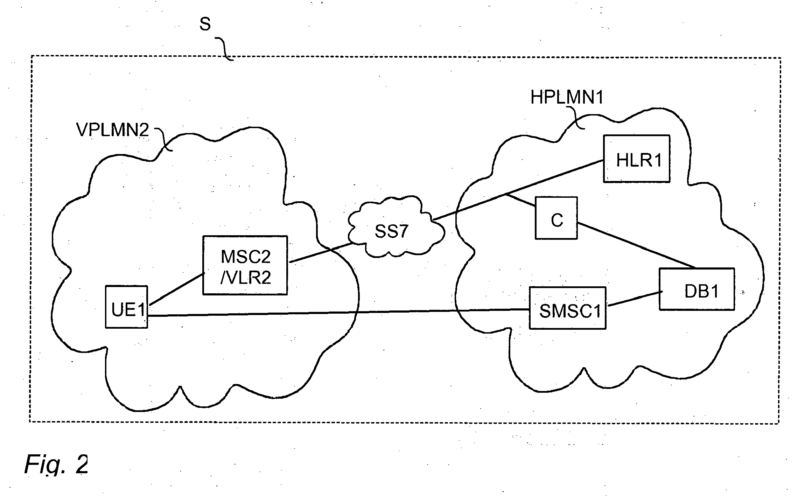

Figure 2 illustrates a communications system S according to a second embodiment of the present solution. Referring to Figure 2, the communications system S comprises a home network HPLMN1, such as a public land mobile network PLMN, and a visited network VPLMN2, such as a public land mobile network PLMN, operated by different network operators. The visited network and the home network are connected to each other via a network utilizing SS7 (signalling system no. 7) which refers to an internationally standardised general-purpose common channel signalling system optimised for operation in digital communications networks. The home network HPLMN1 includes a home location register HLR1, a short message service centre SMSC1, and a price information database DB1. The visited network VPLMN2 includes a mobile switching centre MSC2/visitor location register VLR2. HLR1 and MSC2/VLR2 are able to communicate with each other via SS7. The home network HPLMN1 further includes a function C for analysing the interface between HLR1 and MSC2/VLR2. SMSC1 and C have access to the database DB1. The system S further includes at least one user terminal UE1. In Figure 2, a situation is shown where the user terminal UE1 is located in the coverage area of the visited network VPLMN2, and HPLMN1 is the home network HPLMN2 of the user terminal. In Figure 2, it is assumed that UE1 is capable of roaming in VPLMN2. Figure 1 shows a simplified version of a cellular or wireless network structure, which only illustrates components necessary for illustrating the present solution, even though those skilled in the art naturally know that a general communications system also comprises other functions and structures, which do not have to be described in more detail herein. Although each network node or function UE1, HLR1, SMSC1, DB1, C, MSC2/VLR2, HPLMN1, VPLMN2 has been depicted as one entity, different modules and memory may be implemented in one or more physical or logical entities.

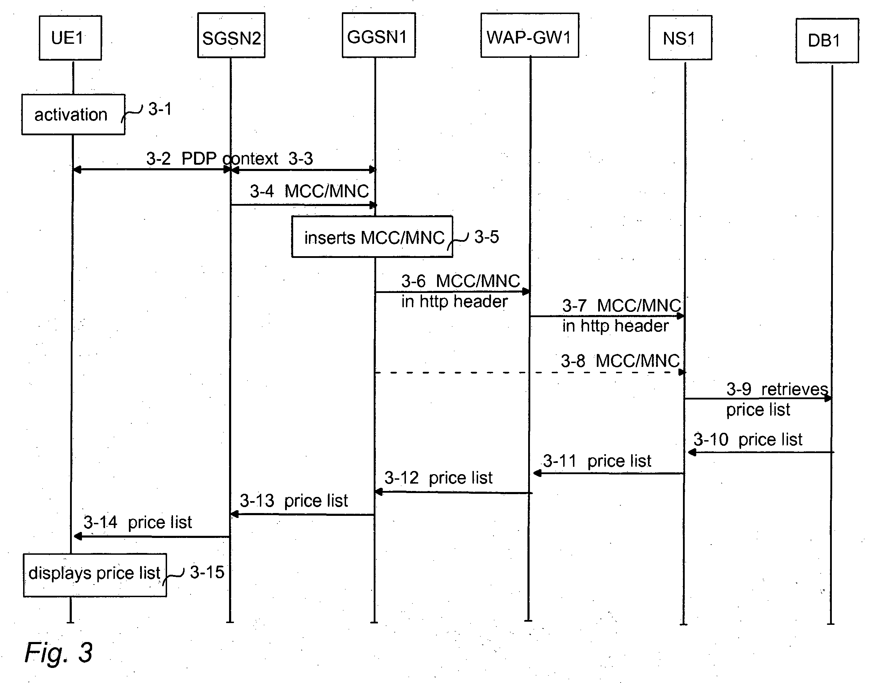

Figure 3 illustrates signalling according to a first embodiment of the present solution.

Referring to Figure 3, in the case of using a browsing service, a user activates 3-1 a browser in his/her user terminal UE1, which in turn activates a PDP context 3-2, 3-3 between UE1, SGSN2, GGSN1. Then, a mobile country code and a mobile network code (MCC/MNC, included in a routing area identity (RAI)) of the visited operator is transferred 3-4 in a GPRS tunnelling protocol (GTP) from SGSN2 to a home gateway a GPRS support node GGSN1. If the traffic passes 3-6, 3-7 through WAP-GW1, GGSN1 inserts 3-5 MCC/MNC into a hypertext transfer protocol (HTTP) header in a message 3-6 transmitted from GGSN1 to WAP-GW1. WAP-GW1 notices that MCC and MNC are in the header and therefore forwards the message 3-6 to the web server NS1 in a message 3-7. Alternatively, GGSN1 routes 3-8 to a different port or page based on MCC/MNC (this means that a message 3-8 is transmitted "directly" (i.e. not via WAP-GW1) from GGSN1 to an appropriate NS1 in order to find information on roaming prices). After receiving the message 3-7 or 3-8, a price list is retrieved 3-9, 3-10 by the web server NS1 from the database DB1, and forwarded 3-11, 3-12, 3-13, 3-14 towards the user terminal UE1 (via NS1, optionally WAP-GW1, GGSN1, and SGSN2. In step 3-15, the user terminal UE1 is forced to display 3-15 an opening site where prices for browsing are presented.

Thus, the retrieval of the price list by the home network is based on MCC and MNC. However, as described above, there are alternative ways as to how the routing between the GGSN1 and the server NS1/DB1 is carried out. One option is that GGSN1 includes a functionality that allows routing to the correct network node, based on MCC/MNC, in order to find the correct price list information. However, if a WAP gateway is used, GGSN1 adds MCC/MNC to the HTTP header, and WAP-GW1 takes care of directing the traffic to the correct web site.

Referring further to Figure 3, in the case of using a client-based service (such as mobile TV, and/or instant messaging), the user activates 3-1 a service in his/her user terminal UE1, which in turn activates a PDP context 3-2, 3-3 between UE1, SGSN2, GGSN1. Then, a mobile country code and a mobile network code (MCC/MNC, included in a routing area identity (RAI)) of the visited operator is transferred 3-4 in a GPRS tunnelling protocol (GTP) from SGSN2 to a home gateway GPRS support node GGSN1. If the traffic passes 3-6, 3-7 through WAP-GW1, GGSN1 inserts 3-5 MCC/MNC into a hypertext transfer protocol (HTTP) header in a message 3-6 transmitted from GGSN1 to WAP-GW1. WAP-GW1 notices that MCC and MNC are in the header and therefore forwards the message 3-6 to NS1 (such as a mobile TV server, and/or IM server) in a message 3-7. Alternatively, GGSN1 routes 3-8 to a different port or page based on MCC/MNC (this means that a message 3-8 is transmitted "directly" (i.e. not via WAP-GW1) from GGSN1 to an appropriate NS1 in order to find information on roaming prices). After receiving message 3-7 or 3-8, a price list is retrieved 3-9, 3-10 by the server NS1 from the database DB1, and forwarded 3-11, 3-12, 3-13, 3-14 towards the user terminal UE1 (via NS1, optionally WAP-GW1, GGSN1, and SGSN2. In step 3-15, a pop-up showing the prices is shown in the client in the user terminal UE1.

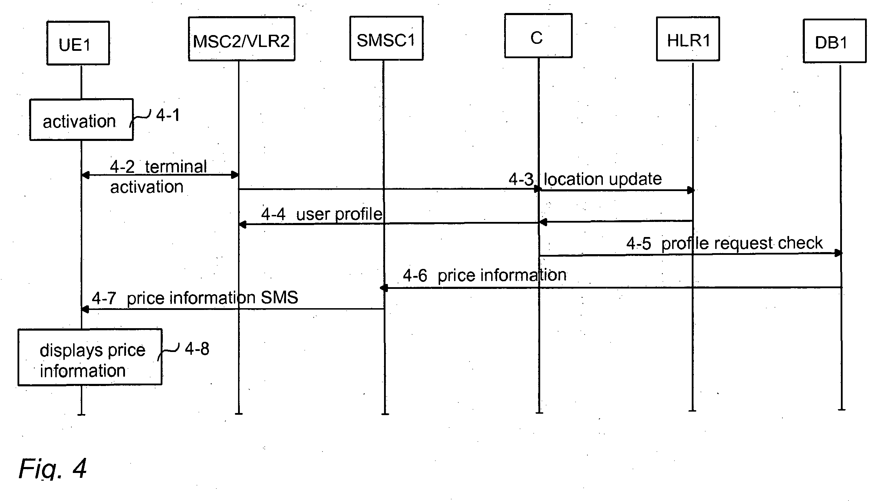

Figure 4 illustrates signalling according to a second embodiment of the present solution.

Referring to Figure 4, the user activates 4-1 the user terminal UE1 (e.g. the user terminal UE1 is switched on, or enters the visited network VPLMN2), which triggers an activation procedure 4-2 between UE1 and MSC2/VLR2, such as a location update procedure 4-3. In response to this, the roaming operator checks the home location register HLR1 for user's profile and updates the current location of UE1 to HLR. This means that a location update message 4-3 is transmitted from MSC2 to HLR1 via SS7. HPLMN1 comprises a function C for analyzing the interface between HLR1 and MSC2/VLR2. The function C is able to detect which visited operator sent the location update message, on the basis of MCC and MNC included in the message 4-3. The function is further able to detect which user terminal the location update message 4-3 is related to, on the basis of an international mobile subscriber identity (IMSI) of the user terminal UE1, included in the message 4-3. HPLMN1 (SMSC1) sends 4-7 visited operator/country price information in a short message (SMS) to the user terminal UE1. This means that a user terminal profile is transmitted in a message 4-4 to MSC2/VLR2 from HLR1. The function C is able to detect the message 4-4 and, based on that, transmit a profile request check message 4-5 to DB1. In response to receiving the profile request check message, price information 4-6 is provided from DB1 to SMSC1. SMSC1 then transmits 4-7 the price information to UE1 in a short message (SMS). In step 4-8, the short message is received in UE1, wherein the price information may be displayed to the user.

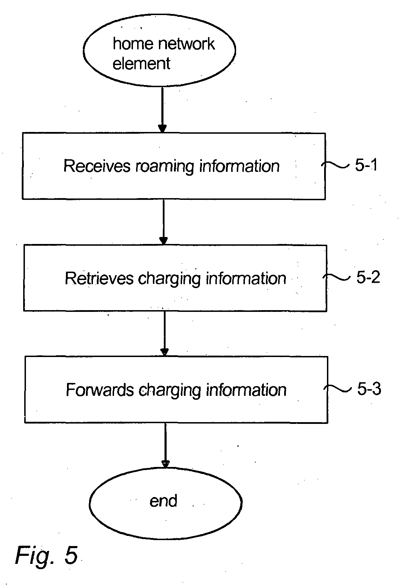

Figure 5 is a flow chart illustrating operation of a home network node according to an embodiment of the present solution. Referring to Figure 5, roaming information is received is step 5-1 in the home network node. The roaming information includes information on a roaming user terminal UE1 and information on a visited network VPLMN2. In response to receiving the roaming information, the home network node is arranged to retrieve 5-2, from DB1, charging information on the visited network VPLMN2. In step 5-3, the home network node forwards the retrieved charging information towards the user terminal UE1 (alternatively, the charging information is provided from DB1 to a further home network node to be forwarded by it to the user terminal UE1).

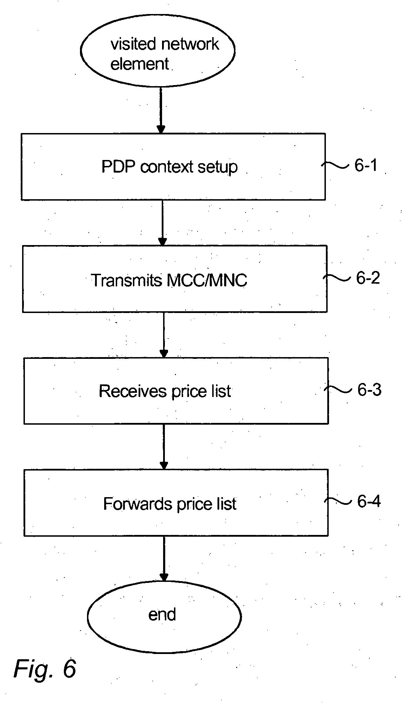

Figure 6 is a flow chart illustrating operation of a visited network node SGSN2 according to the first embodiment of the present solution. Referring to Figure 6, a PDP context is set up 6-1 with UE1 and GGSN1. In response to this, a mobile country code and mobile network code (MCC/MNC) of the visited operator is transmitted 6-2 in a GPRS tunnelling protocol (GTP) from the visited network node SGSN2 to a home gateway GPRS support node GGSN1. In step 6-3, charging information regarding the visited network VPLMN2 is received from GGSN1. The charging information is then forwarded 6-4 to the user terminal UE1.

According to an embodiment, price information is transmitted in a short message in case of a browsing and/or client based service. This means that the process proceeds according to Figure 3 until the message 3-9 is received in DB1. After that, the process proceeds according to Figure 4 (i.e. messages 4-6, 4-7, step 4-8).

According to an embodiment, the home network recognises which communications service (mobile phone, WLAN, browsing, IM, mobile TV) the user terminal is using, is about to use, and/or is able to use in the visited network, and, based on the recognition, provides the roaming user terminal with the relevant charging information on the relevant communications service.

According to an embodiment, the home network includes roaming prices (of visited networks) in a database DB1 where they can be retrieved from in order to be provided to the user terminal by using SMS, a pop-up, or a web page as described above. Each service has a known traffic profile (e.g. mobile TV 100 kbit/s), meaning that an estimate of the price of using the service can be calculated in the home network. The estimates are then stored in the price information database DB1.

The present solution allows the user terminal to be provided with price information before the user terminal actually starts using a data service (i.e. the price information is provided when the user terminal is turned on, or during an activation step). Alternatively, price information may be provided immediately after the user terminal has activated a data service.

The items and steps shown in the figures are simplified and only aim at describing the idea of the present solution. The steps/points, signaling messages and related functions described above in Figures 1 to 6 are in no absolute chronological order, and some of the steps/points may be performed simultaneously or in an order different from the given one. Other functions may also be executed between the steps/points or within the steps/points and other signaling messages sent between the illustrated messages. Some of the steps/points or part of the steps/points may also be left out or integrated together or replaced by a corresponding step/point or part of the step/point. The apparatus operations illustrate a procedure that may be implemented in one or more physical or logical entities. The signaling messages are only exemplary and may even comprise several separate messages for transmitting the same information. The messages serve only as examples and they may contain only some of the information mentioned above. In addition, the messages may also contain other information, and the titles may deviate from those given above. Instead of or in addition to a home network node, and/or a visited network node, the above-described operations may be performed in any other element of a communications system.

In addition to prior art means, a system or system network nodes that implement the functionality of the present solution comprise means for carrying out a price information delivery procedure as described above. Existing network nodes and user terminals comprise processors and memory that may be utilized in the operations of the present solution. Any changes necessary in implementing the present solution may be carried out using supplements or updates of software routines and/or routines included in application-specific integrated circuits (ASIC) and/or programmable circuits, such as EPLDs (electrically programmable logic device) or FPGAs (field programmable gate array).

It will be obvious to a person skilled in the art that, as technology advances, the inventive concept can be implemented in various ways. The invention and its embodiments are not limited to the examples described above but may vary within the scope of the claims.

## Claims

1. A method of providing a roaming service to a user terminal (UE1) in a communications system (S), the system (S) comprising
a user terminal (UE1), and
a first communications network (HPLMN1), wherein the first network (HPLMN1) is a home network of the user terminal,
wherein the user terminal (UE1) is roaming in a visited network (VPLMN2), **characterized in that**, in response to recognising a predetermined activation event (3-2, 3-3, 4-2) related to a mobile data service and to the user terminal (UE1), the method comprises
providing (3-4, 3-6, 3-8, 4-3), in a HTTP header, visited-network-specific roaming information on the user terminal (UE1) to a home network node (NS1, C);
based on said roaming information, the home network node (NS1, C) retrieving (3-9, 4-5) charging information, wherein said charging information includes a visited-network-specific cost estimate formed in the home network (HPLMN1) for the user terminal (UE1) for said mobile data service; and
providing (3-14, 4-7) said charging information to the user terminal (UE1).

2. A method as claimed in claim 1, **characterized by** storing, in the home network (HPLMN1, DB1), information on roaming charging rates of the visited network (VPLMN2).

3. A method as claimed in claim 1 or 2, **characterized by** the roaming information including user terminal and/or subscriber information.

4. A method as claimed in claim 1, 2 or 3, **characterized by** the roaming information being provided to the home network node (NS1) by a visited network node (MSC2/VLR2).

5. A method as claimed in any of claims 1 to 4, **characterized by** the roaming information being provided to the home network node (NS1) by a visited network node (SGSN2) via at least one further home network node (GGSN1, WAP-GW1).

6. A method as claimed in any of claims 1 to 5, **characterized by** said activation event including a packet data protocol PDP context activation procedure.

7. A method as claimed in any of claims 1 to 6, **characterized by** the roaming information including information on a mobile country code MCC and mobile network code MNC of the visited network (VPLMN2).

8. A method as claimed in any of claims 1 to 7, **characterized by**
receiving (3-5), in a gateway GPRS node, a mobile country code MCC and mobile network code MNC of the visited network (VPLMN2) from the visited network; and
transmitting (3-6, 3-7), from the gateway GPRS node, the mobile country code MCC and mobile network code MNC in the HTTP header to a server node (NS1) via a WAP gateway.

9. A method as claimed in any of claims 1 to 4, **characterized by** said activation event including a location update procedure.

10. A method as claimed in any of claims 1, 2, 3, 4 or 9, **characterized by** the roaming information including a user profile request.

11. A method as claimed in any of claims 1, 2, 3, 4, 9 or 10, **characterized by** transmitting a price list to the user terminal by utilizing a short message SMS.

12. A communications system (S) comprising
a user terminal (UE1), and
a first communications network (HPLMN1), wherein the first network (HPLMN1) is a home network of the user terminal,
wherein the user terminal (UE1) is capable of roaming in a visited network (VPLMN2), **characterized in that**, in response to recognising a predetermined activation event related to a mobile data service and to the user terminal (UE1) roaming in the visited network, the system is configured to
provide, in a HTTP header, visitor-network-specific roaming information on the user terminal (UE1) to a home network node (NS1, C),;
wherein, based on said roaming information, the home network node (NS1, C) is configured to retrieve charging information, wherein said charging information includes a visited-network-specific cost estimate formed in the home network (HPLMN1) for the user terminal (UE1) for said mobile data service;
the system being configured to provide the retrieved charging information to the user terminal (UE1).

13. A system as claimed in claim 12, **characterized in that** it is configured to store, in the home network (HPLMN1), information on charging rates of the visited network (VPLMN2) for user terminals roaming in the visited network (VPLMN2).

14. A system as claimed in claim 12 or 13, **characterized in that** the roaming information includes user terminal and/or subscriber information.

15. A system as claimed in claim 12, 13 or 14, **characterized in that** said activation event includes a packet data protocol PDP context activation procedure.

16. A system as claimed in any of claims 12 to 15, **characterized in that** the roaming information includes information on a mobile country code MCC and mobile network code MNC of the visited network (VPLMN2).

17. A system as claimed in claim 12, 13 or 14, **characterized in that** said activation event includes a location update procedure.

18. A system as claimed in any of claims 12, 13, 14 or 17, **characterized in that** the roaming information includes a user profile request.

19. A system as claimed in any of claims 1 to 18, **characterized in that** it is capable of providing the user terminal (UE1) with a browsing service, a mobile television service, and/or an instant messaging IM service.

20. A visited network node of a communications system (S), the system comprising
a user terminal (UE1), and
a first communications network (HPLMN1), wherein the first network (HPLMN1) is a home network of the user terminal,
wherein the user terminal (UE1) is capable of roaming in a visited network (VPLMN2), **characterized in that** the visited network node is, in response to recognising a predetermined activation event related to a mobile data service and to the user terminal (UE1) roaming in the visited network, configured to
provide, in a HTTP header, visited-network-specific roaming information on the user terminal to a home network node (NS1, C).

21. A visited network node as claimed in claim 20, **characterized in that** the visited network node is configured to
receive, from the home network (HPLMN1), charging information, wherein said charging information includes a visited-network-specific cost estimate formed in the home network (HPLMN1) for the user terminal (UE1) for said mobile data service; and
provide the received charging information to the user terminal (UE1).

22. A visited network node as claimed in claim 20 or 21, **characterized in that** it is a mobile switching centre (MSC2/VLR2).

23. A visited network node as claimed in claim 20 or 21, **characterized in that** it is a serving GPRS support node (SGSN2).

24. A home network node of a communications system (S), the system comprising
a user terminal (UE1), and
a first communications network (HPLMN1), wherein the first network (HPLMN1) is a home network of the user terminal,
wherein the user terminal (UE1) is capable of roaming in a visited network (VPLMN2) and using a mobile data service, **characterized in that** the home network node (NS1, C) is
in response to receiving, in a HTTP header, visited-network-specific roaming information on the user terminal (UE1) roaming in the visited network (VPLMN2), configured to
retrieve, based on said roaming information, charging information, wherein said charging information includes a visited-network-specific cost estimate formed in the home network (HPLMN1) for the user terminal (UE1) for said mobile data service; and
transmit the retrieved charging information to the user terminal (UE1).

25. A home network node as claimed in claim 24, **characterized in that** it is configured to transmit the retrieved charging information to the user terminal (UE1) via a visited network node and/or via at least one further home network node.

26. A home network node as claimed in claim 24 or 25, **charac**- **terized** in that it is configured to receive the roaming information from a visited network node (SGSN2, MSC2/VLR2).

27. A home network node as claimed in any of claims 24 to 26, **characterized in that** it is configured to receive the roaming information from a visited network node (SGSN2) via at least one further home network node (GGSN1, WAP-GW1).

28. A home network node as claimed in any of claims 24 to 27, **characterized in that** it is configured to
receive a mobile country code MCC and mobile network code MNC of the visited network in the HTTP header; and
retrieve the charging information from a database based on the mobile country code and mobile network code.

29. A home network node as claimed in any of claims 24 to 28, **characterized in that** it is configured to
receive a mobile country code MCC and mobile network code MNC of the visited network (VPLMN2) from the visited network; and
transmit the mobile country code and mobile network code MNC in the HTTP header to a server node (NS1) via a WAP gateway.

## Patentansprüche

1. Verfahren zum Bereitstellen einer Roaming-Dienstleistung für ein Benutzerendgerät (UE1) in einem Kommunikationssystem (S), wobei das System (S) aufweist:
ein Benutzerendgerät (UE1), und
ein erstes Kommunikationsnetzwerk (HPLMN1), wobei das erste Netzwerk (HPLMN1) ein Heimnetzwerk des Benutzerendgeräts ist,
wobei das Benutzerendgerät (UE1) in einem besuchten Netzwerk (VPLMN2) roamt, **dadurch gekennzeichnet, dass** das Verfahren in Reaktion auf das Erkennen eines vorbestimmten Aktivierungsereignisses (3-2, 3-3, 4-2), das in Zusammenhang mit einem Mobildatenservice und dem Benutzerendgerät (UE1) steht, die folgenden Schritte aufweist:
in einem HTTP-Header erfolgendes Liefern (3-4, 3-6, 3-8, 4-3) von für das besuchte Netzwerk spezifischen Roaming-Informationen auf dem Benutzerendgerät (UE1) an einen Heimnetzwerkknoten (NS1, C);
basierend auf den Roaming-Informationen, Abrufen von Gebühreninformationen (3-9, 4-5) durch den Heimnetzwerkknoten (NS1, C), wobei die Gebühreninformationen eine für das besuchte Netzwerk spezifische Kostenschätzung aufweisen, die in dem Heimnetzwerk (HPLMN1) für das Benutzerendgerät (UE1) für den Mobildatenservice erstellt wird; und
Liefern (3-14, 4-7) der Gebühreninformationen an das Benutzerendgerät (UE1).

2. Verfahren nach Anspruch 1, **gekennzeichnet durch** das Speichern von Informationen über die Roaming-Gebührensätze des besuchten Netzwerks (VPLMN2) in dem Heimnetzwerk (HPLMN1, DB1).

3. Verfahren nach Anspruch 1 oder 2, **dadurch gekennzeichnet, dass** die Roaming-Informationen Benutzerendgerät- und/oder Abonnenteninformationen aufweisen.

4. Verfahren nach Anspruch 1, 2 oder 3, **dadurch gekennzeichnet, dass** die Roaming-Informationen durch einen Knoten (MSC2/VLR2) des besuchten Netzwerks an den Heimnetzwerkknoten (NS1) gesendet werden.

5. Verfahren nach einem der Ansprüche 1 bis 4, **dadurch gekennzeichnet, dass** die Roaming-Informationen durch einen Knoten (SGSN2) des besuchten Netzwerks über mindestens einen weiteren Heimnetzwerkknoten (GGSN1, WAP-GW1) an den Heimnetzwerkknoten (NS1) gesendet werden.

6. Verfahren nach einem der Ansprüche 1 bis 5, **dadurch gekennzeichnet, dass** das Aktivierungsereignis einen Paketdatenprotokoll-(PDP)- Kontext-Aktivierungsvorgang aufweist.

7. Verfahren nach einem der Ansprüche 1 bis 6, **dadurch gekennzeichnet, dass** die Roaming-Informationen Informationen über einen Mobile Country Code MCC und einen Mobile Network Code MNC des besuchten Netzwerks (VPLMN2) aufweisen.

8. Verfahren nach einem der Ansprüche 1 bis 7, **gekennzeichnet durch** die folgenden Schritte:
in einem Gateway-GPRS-Knoten, Empfangen (3-5) eines Mobile Country Codes MCC und eines Mobile Network Codes MNC des besuchten Netzwerks (VPLMN2) von dem besuchten Netzwerk; und
von dem Gateway-GPRS-Knoten, Senden des Mobile Country Codes MCC und des Mobile Network Codes MNC des besuchten Netzwerks (VPLMN2) in dem HTTP-Header an einen Serverknoten (NS1) über ein WAP-Gateway.

9. Verfahren nach einem der Ansprüche 1 bis 4, **dadurch gekennzeichnet, dass** das Aktivierungsereignis einen Positionsaktualisierungsvorgang aufweist.

10. Verfahren nach einem der Ansprüche 1, 2, 3, 4 oder 9, **dadurch gekennzeichnet, dass** die Roaming-Informationen eine Benutzerprofilanfrage aufweisen.

11. Verfahren nach einem der Ansprüche 1, 2, 3, 4, 9 oder 10, **dadurch gekennzeichnet, dass** unter Verwendung einer Kurzmitteilung SMS eine Preisliste an das Benutzerendgerät gesendet wird.

12. Kommunikationssystem (S) mit
einem Benutzerendgerät (UE1), und
einem ersten Kommunikationsnetzwerk (HPLMN1), wobei das erste Netzwerk (HPLMN1) ein Heimnetzwerk des Benutzerendgeräts ist,
wobei das Benutzerendgerät (UE1) in der Lage ist, in einem besuchten Netzwerk (VPLMN2) zu roamen, **dadurch gekennzeichnet, dass** das System konfiguriert ist, um in Reaktion auf das Erkennen eines vorbestimmten Aktivierungsereignisses, das in Zusammenhang mit einem Mobildatenservice und dem in dem besuchten Netzwerk roamenden Benutzerendgerät (UE1) steht,
für das besuchte Netzwerk spezifische Roaming-Informationen auf dem Benutzerendgerät (UE1) in einem HTTP-Header an einen Heimnetzwerkknoten (NS1, C) zu liefern;
wobei, basierend auf den Roaming-Informationen, der Heimnetzwerkknoten (NS1, C) konfiguriert ist, um Gebühreninformationen abzurufen, wobei die Gebühreninformationen eine für das besuchte Netzwerk spezifische Kostenschätzung aufweisen, die in dem Heimnetzwerk (HPLMN1) für das Benutzerendgerät (UE1) für den Mobildatenservice erstellt wird; und
wobei das System konfiguriert ist, um die abgefragten Gebühreninformationen an das Benutzerendgerät (UE1) zu liefern.

13. System nach Anspruch 12, **dadurch gekennzeichnet, dass** es konfiguriert ist, um in dem Heimnetzwerk (HPLMN1) Informationen über die Roaming-Gebührensätze des besuchten Netzwerks (VPLMN2) für in dem besuchten Netzwerk (VPLMN2) roamende Benutzerendgeräte zu speichern.

14. System nach Anspruch 12 oder 13, **dadurch gekennzeichnet, dass** die Roaming-Informationen Benutzerendgerät- und/oder Abonnenteninformationen aufweisen.

15. System nach Anspruch 12, 13 oder 14, **dadurch gekennzeichnet, dass** das Aktivierungsereignis einen Paketdatenprotokoll-(PDP)-Kontext-Aktivierungsvorgang aufweist.

16. System nach einem der Ansprüche 12 bis 15, **dadurch gekennzeichnet, dass** die Roaming-Informationen Informationen über einen Mobile Country Code MCC und einen Mobile Network Code MNC des besuchten Netzwerks (VPLMN2) aufweisen.

17. System nach Anspruch 12, 13 oder 14, **dadurch gekennzeichnet, dass** das Aktivierungsereignis einen Positionsaktualisierungsvorgang aufweist.

18. System nach einem der Ansprüche 12, 13, 14 oder 17, **dadurch gekennzeichnet, dass** die Roaming-Informationen eine Benutzerprofilanfrage aufweisen.

19. System nach einem der Ansprüche 1 bis 18, **dadurch gekennzeichnet, dass** es in der Lage ist, für das Benutzerendgerät (UE1) einen Browser-Service, einen Mobil-Fernseh-Service und/oder einen Instant Messaging IM Service bereitzustellen.

20. Knoten eines besuchten Netzwerks eines Kommunikationssystems (S), wobei das System aufweist:
ein Benutzerendgerät (UE1), und
ein erstes Kommunikationsnetzwerk (HPLMN1), wobei das erste Netzwerk (HPLMN1) ein Heimnetzwerk des Benutzerendgeräts ist,
wobei das Benutzerendgerät (UE1) in der Lage ist, in einem besuchten Netzwerk (VPLMN2) zu roamen, **dadurch gekennzeichnet, dass** der Knoten des besuchten Netzwerks konfiguriert ist, um in Reaktion auf das Erkennen eines vorbestimmten Aktivierungsereignisses, das in Zusammenhang mit einem Mobildatenservice und dem in dem besuchten Netzwerk roamenden Benutzerendgerät (UE1) steht,
für das besuchte Netzwerk spezifische Roaming-Informationen auf dem Benutzerendgerät (UE1) in einem HTTP-Header an einen Heimnetzwerkknoten (NS1, C) zu liefern.

21. Knoten eines besuchten Netzwerks nach Anspruch 20, **dadurch gekennzeichnet, dass** der Knoten eines besuchten Netzwerks konfiguriert ist, um
von dem Heimnetzwerk (HPLMN1) Gebühreninformationen zu empfangen, wobei die Gebühreninformationen eine für das besuchte Netzwerk spezifische Kostenschätzung aufweisen, die in dem Heimnetzwerk (HPLMN1) für das Benutzerendgerät (UE1) für den Mobildatenservice erstellt wird; und
die empfangenen Gebühreninformationen an das Benutzerendgerät (UE1) zu liefern.

22. Knoten eines besuchten Netzwerks nach Anspruch 20 oder 21, **dadurch gekennzeichnet, dass** er eine Mobilvermittlungsstelle (MSC2/VLR2) ist.

23. Knoten eines besuchten Netzwerks nach Anspruch 20 oder 21, **dadurch gekennzeichnet, dass** er ein Serving GPSR Support Node (SGSN2) ist.

24. Heimnetzwerkknoten eines Kommunikationssystems (S), wobei das System aufweist:
ein Benutzerendgerät (UE1), und
ein erstes Kommunikationsnetzwerk (HPLMN1), wobei das erste Netzwerk (HPLMN1) ein Heimnetzwerk des Benutzerendgeräts ist,
wobei das Benutzerendgerät (UE1) in der Lage ist, in einem besuchten Netzwerk (VPLMN2) zu roamen und einen Mobildatenservice zu nutzen, **dadurch gekennzeichnet, dass** der Heimnetzwerkknoten (NS1, C) konfiguriert ist, um in Reaktion auf das Empfangen von für das besuchte Netzwerk spezifischen Roaming-Informationen auf dem Benutzerendgerät (UE1) in dem besuchten Netzwerk (VPLMN2) zu roamen, und
basierend auf den Roaming-Informationen Gebühreninformationen abzurufen, wobei die Gebühreninformationen eine für das besuchte Netzwerk spezifische Kostenschätzung aufweisen, die in dem Heimnetzwerk (HPLMN1) für das Benutzerendgerät (UE1) für den Mobildatenservice erstellt wird; und
die abgerufenen Gebühreninformationen an das Benutzerendgerät (UE1) zu senden.

25. Heimnetzwerkknoten nach Anspruch 24, **dadurch gekennzeichnet, dass** er konfiguriert ist, um die abgerufenen Gebühreninformationen über einen Knoten eines besuchten Netzwerks und/oder über mindestens einen weiteren Heimnetzwerkknoten an das Benutzerendgerät (UE1) zu senden.

26. Heimnetzwerkknoten nach Anspruch 24 oder 25, **dadurch gekennzeichnet, dass** er zum Empfangen der Roaming-Informationen von einem Knoten (SGSN2, MSC2/VLR2) eines besuchten Netzwerks konfiguriert ist.

27. Heimnetzwerkknoten nach Anspruch 24 bis 26, **dadurch gekennzeichnet, dass** er konfiguriert ist, um die Roaming-Informationen von einem Knoten (SGSN2) eines besuchten Netzwerks über mindestens einen weiteren Heimnetzwerkknoten (GGSN1, WAP-GW1) zu empfangen.

28. Heimnetzwerkknoten nach einem der Ansprüche 24 bis 27, **dadurch gekennzeichnet, dass** er konfiguriert ist, um
einen Mobile Country Code MCC und einen Mobile Network Codes MNC des besuchten Netzwerks in dem HTTP-Header zu empfangen; und
die Gebühreninformationen aus einer Datenbank auf der Basis des Mobile Country Codes und des Mobile Network Codes abzurufen.

29. Heimnetzwerkknoten nach einem der Ansprüche 24 bis 28, **dadurch gekennzeichnet, dass** er konfiguriert ist, um
einen Mobile Country Code MCC und einen Mobile Network Codes MNC des besuchten Netzwerks (VPLMN2) von dem besuchten Netzwerk zu empfangen; und
den Mobile Country Code und den Mobile Network Code in dem HTTP-Header an einen Serverknoten (NS1) über ein WAP-Gateway zu senden.

## Revendications

1. Procédé de fourniture d'un service d'itinérance à un terminal d'utilisateur (UE1) dans un système de communication (S), le système (S) comprenant :
un terminal d'utilisateur (UE1) ; et
un premier réseau de communication (HPLMN1), dans lequel le premier réseau (HPLMN1) est un réseau domestique du terminal d'utilisateur ;
dans lequel le terminal d'utilisateur (UE1) est en itinérance dans un réseau visité (VPLMN2), **caractérisé en ce que**, en réponse à la reconnaissance d'un événement d'activation prédéterminé (3-2, 3-3, 4-2) connexe à un service de données mobiles et au terminal d'utilisateur (UE1), le procédé comprend les étapes ci-dessous consistant à ou dans lesquelles :
fournir (3-4, 3-6, 3-8, 4-3), dans un en-tête de protocole HTTP, des informations d'itinérance spécifiques au réseau visité sur le terminal d'utilisateur (UE1) à un noeud de réseau domestique (NS1, C) ;
sur la base desdites informations d'itinérance, le noeud de réseau domestique (NS1, C) récupère (3-9, 4-5) des informations de taxation, dans lequel lesdites informations de taxation incluent une estimation de coût spécifique au réseau visité, formée dans le réseau domestique (HPLMN1) pour le terminal d'utilisateur (UE1), pour ledit service de données mobiles ; et
fournir (3-14, 4-7) lesdites informations de taxation au terminal d'utilisateur (UE1).

2. Procédé selon la revendication 1, **caractérisé par** l'étape consistant à stocker, dans le réseau domestique (HPLMN1, DB1), des informations sur des taux de taxation d'itinérance du réseau visité (VPLMN2).

3. Procédé selon la revendication 1 ou 2, **caractérisé en ce que** les informations d'itinérance incluent des informations de terminal d'utilisateur et/ou d'abonné.

4. Procédé selon la revendication 1, 2 ou 3, **caractérisé en ce que** les informations d'itinérance sont fournies au noeud de réseau domestique (NS1) par un noeud de réseau visité (MSC2/VLR2).

5. Procédé selon l'une quelconque des revendications 1 à 4, **caractérisé en ce que** les informations d'itinérance sont fournies au noeud de réseau domestique (NS1) par un noeud de réseau visité (SGSN2), par l'intermédiaire d'au moins un noeud de réseau domestique supplémentaire (GGSN1, WAP-GW1).

6. Procédé selon l'une quelconque des revendications 1 à 5, **caractérisé en ce que** ledit événement d'activation inclut une procédure d'activation de contexte de protocole de données en paquets, PDP.

7. Procédé selon l'une quelconque des revendications 1 à 6, **caractérisé en ce que** les informations d'itinérance incluent des informations sur un indicatif de pays mobile, MCC, et un code de réseau mobile, MNC, du réseau visité (VPLMN2).

8. Procédé selon l'une quelconque des revendications 1 à 7, **caractérisé par** les étapes ci-dessous consistant à :
recevoir (3-5), dans un noeud de service GPRS de transit, un indicatif de pays mobile, MCC, et un code de réseau mobile, MNC, du réseau visité (VPLMN2) en provenance du réseau visité ; et
transmettre (3-6, 3-7), à partir du noeud de service GPRS de transit, l'indicatif de pays mobile, MCC, et le code de réseau mobile, MNC, dans l'en-tête de protocole HTTP, à un noeud de serveur (NS1) par l'intermédiaire d'une passerelle WAP.

9. Procédé selon l'une quelconque des revendications 1 à 4, **caractérisé en ce que** ledit événement d'activation inclut une procédure de mise à jour de localisation.

10. Procédé selon l'une quelconque des revendications 1, 2, 3, 4 ou 9, **caractérisé en ce que** les informations d'itinérance incluent une demande de profil d'utilisateur.

11. Procédé selon l'une quelconque des revendications 1, 2, 3, 4, 9 ou 10, **caractérisé par** l'étape consistant à transmettre une liste de prix au terminal d'utilisateur en utilisant un service de messages courts, SMS.

12. Système de communication (S) comportant :
un terminal d'utilisateur (UE1) ; et
un premier réseau de communication (HPLMN1), dans lequel le premier réseau (HPLMN1) est un réseau domestique du terminal d'utilisateur ;
dans lequel le terminal d'utilisateur (UE1) est apte à être en itinérance dans un réseau visité (VPLMN2), **caractérisé en ce que**, en réponse à la reconnaissance d'un événement d'activation prédéterminé connexe à un service de données mobiles et au terminal d'utilisateur (UE1) en itinérance dans le réseau visité, le système est configuré de manière à :
fournir, dans un en-tête de protocole HTTP, des informations d'itinérance spécifiques au réseau visité sur le terminal d'utilisateur (UE1), à un noeud de réseau domestique (NS1, C) ;
dans lequel, sur la base desdites informations d'itinérance, le noeud de réseau domestique (NS1, C) est configuré de manière à récupérer des informations de taxation, dans lequel lesdites informations de taxation incluent une estimation de coût spécifique au réseau visité, formée dans le réseau domestique (HPLMN1) pour le terminal d'utilisateur (UE1), pour ledit service de données mobiles ;
le système étant configuré de manière à fournir les informations de taxation récupérées au terminal d'utilisateur (UE1).

13. Système selon la revendication 12, **caractérisé en ce qu'**il est configuré de manière à stocker, dans le réseau domestique (HPLMN1), des informations sur des taux de taxation du réseau visité (VPLMN2) pour des terminaux d'utilisateurs en itinérance dans le réseau visité (VPLMN2).

14. Système selon la revendication 12 ou 13, **caractérisé en ce que** les informations d'itinérance incluent des informations de terminal d'utilisateur et/ou d'abonné.

15. Système selon la revendication 12, 13 ou 14, **caractérisé en ce que** ledit événement d'activation inclut une procédure d'activation de contexte de protocole de données en paquets, PDP.

16. Système selon l'une quelconque des revendications 12 à 15, **caractérisé en ce que** les informations d'itinérance incluent des informations sur un indicatif de pays mobile, MCC, et sur un code de réseau mobile, MNC, du réseau visité (VPLMN2).

17. Système selon la revendication 12, 13 ou 14, **caractérisé en ce que** ledit événement d'activation inclut une procédure de mise à jour de localisation.

18. Système selon l'une quelconque des revendications 12, 13, 14 ou 17, **caractérisé en ce que** les informations d'itinérance incluent une demande de profil d'utilisateur.

19. Système selon l'une quelconque des revendications 1 à 18, **caractérisé en ce qu'**il est apte à fournir, au terminal d'utilisateur (UE1), un service de navigation, un service de télévision mobile, et/ou un service de messagerie instantanée, IM.

20. Noeud de réseau visité d'un système de communication (S), le système comprenant :
un terminal d'utilisateur (UE1) ; et
un premier réseau de communication (HPLMN1), dans lequel le premier réseau (HPLMN1) est un réseau domestique du terminal d'utilisateur ;
dans lequel le terminal d'utilisateur (UE1) est apte à être en itinérance dans un réseau visité (VPLMN2), **caractérisé en ce que** le noeud de réseau visité est, en réponse à la reconnaissance d'un événement d'activation prédéterminé connexe à un service de données mobiles et au terminal d'utilisateur (UE1) en itinérance dans le réseau visité, configuré de manière à :
fournir, dans un en-tête de protocole HTTP, des informations d'itinérance spécifiques au réseau visité sur le terminal d'utilisateur à un noeud de réseau domestique (NS1, C).

21. Noeud de réseau visité selon la revendication 20, **caractérisé en ce que** le noeud de réseau visité est configuré de manière à :
recevoir, en provenance du réseau domestique (HPLMN1), des informations de taxation, dans lequel lesdites informations de taxation incluent une estimation de coût spécifique au réseau visité, formée dans le réseau domestique (HPLMN1) pour le terminal d'utilisateur (UE1), pour ledit service de données mobiles ; et
fournir les informations de taxation reçues au terminal d'utilisateur (UE1).

22. Noeud de réseau visité selon la revendication 20 ou 21, **caractérisé en ce qu'**il correspond à un centre de commutation du service des mobiles (MSC2/VLR2).

23. Noeud de réseau visité selon la revendication 20 ou 21, caractérisé en ce **qu**'il correspond à un noeud de support GPRS de service (SGSN2).

24. Noeud de réseau domestique d'un système de communication (S), le système comprenant :
un terminal d'utilisateur (UE1) ; et
un premier réseau de communication (HPLMN1), dans lequel le premier réseau (HPLMN1) est un réseau domestique du terminal d'utilisateur ;
dans lequel le terminal d'utilisateur (UE1) est apte à être en itinérance dans un réseau visité (VPLMN2) et à utiliser un service de données mobiles, **caractérisé en ce que** le noeud de réseau domestique (NS1, C) est
en réponse à la réception, dans un en-tête de protocole HTTP, d'informations d'itinérance spécifiques au réseau visité sur le terminal d'utilisateur (UE1) en itinérance dans le réseau visité (VPLMN2), configuré de manière à :
récupérer, sur la base desdites informations d'itinérance, des informations de taxation, dans lequel lesdites informations de taxation incluent une estimation de coût spécifique au réseau visité, formée dans le réseau domestique (HPLMN1) pour le terminal d'utilisateur (UE1), pour ledit service de données mobiles ; et
transmettre les informations de taxation récupérées au terminal d'utilisateur (UE1).

25. Noeud de réseau domestique selon la revendication 24, caractérisé en ce **qu**'il est configuré de manière à transmettre les informations de taxation récupérées, au terminal d'utilisateur (UE1), par l'intermédiaire d'un noeud de réseau visité, et/ou par l'intermédiaire d'au moins un noeud de réseau domestique supplémentaire.

26. Noeud de réseau domestique selon la revendication 24 ou 25, **caractérisé en ce qu'**il est configuré de manière à recevoir les informations d'itinérance en provenance d'un noeud de réseau visité (SGSN2, MSC2/VLR2).

27. Noeud de réseau domestique selon l'une quelconque des revendications 24 à 26, caractérisé en ce **qu**'il est configuré de manière à recevoir les informations d'itinérance en provenance d'un noeud de réseau visité (SGSN2) par l'intermédiaire d'au moins un noeud de réseau domestique supplémentaire (GGSN1, WAP-GW1).

28. Noeud de réseau domestique selon l'une quelconque des revendications 24 à 27, **caractérisé en ce qu'**il est configuré de manière à :
recevoir un indicatif de pays mobile, MCC, et un code de réseau mobile, MNC, du réseau visité, dans l'en-tête de protocole HTTP ; et
récupérer les informations de taxation à partir d'une base de données, sur la base de l'indicatif de pays mobile et du code de réseau mobile.

29. Noeud de réseau domestique selon l'une quelconque des revendications 24 à 28, caractérisé en ce **qu**'il est configuré de manière à :
recevoir un indicatif de pays mobile, MCC, et un code de réseau mobile, MNC, du réseau visité (VPLMN2), en provenance du réseau visité ; et
transmettre l'indicatif de pays mobile et le code de réseau mobile, MNC, dans l'en-tête de protocole HTTP, à un noeud de serveur (NS1), par l'intermédiaire d'une passerelle WAP.
